# FASCICULE DE BREVET EUROPEEN

(11) **EP 1 403 682 B1**
(45) Date de publication et mention de la délivrance du brevet: **14.06.2006**
(21) Numéro de dépôt: 03291886.4
(22) Date de dépôt: 29.07.2003
(51) Int. Cl.: G02C 5/22, G02C 1/02

(54) **Lunettes du type sans entourage**
Randlose Brille
Rimless spectacles

(30) Priorité: 28.08.2002 FR 0210680
(43) Date de publication de la demande: 31.03.2004
(73) Titulaire: Minima, 91310 Linas (FR)
(72) Inventeur: Perie, Jean-Claude, 82000 Montauban (FR); Tiberghien, Hervé, 06500 Menton (FR); Dalex, Robert, 91660 Mereville (FR)
(74) Mandataire: Jaunez, Xavier

(56) Documents cités:
- EP-A- 0 426 006
- WO-A-01/53877
- WO-A-02/06882
- FR-A- 2 751 431

## Description

### DOMAINE DE L'INVENTION

La présente invention concerne le domaine des lunettes du type sans entourage, comportant un pontet reliant les deux verres de lunettes, et deux branches latérales articulées.

### ARRIERE-PLAN DE L'INVENTION

Les lunettes dites sans entourage, ou encore à monture percée du fait des perçages pratiqués dans l'épaisseur des verres pour la fixation de la monture, sont de plus en plus répandues. On pourra se référer pour l'arrière-plan technologique aux documents WO-A-01/53877, FR-A-2 751 431, EP-A-0 666 490, EP-A-0 718 660, EP-A-0 997 763, WO-A-01/20 388, EP-A-1 120 678, EP-A-1 107 042, WO-A-01/96 935, EP-A-1 186 935, EP-A-1 164 410, FR-A-2 810 748, WO-A-02/46 830, WO-A-02/33 474, WO-A-02/29 474, et EP-A-1 180 712.

On s'est plus récemment intéressé à des lunettes du type sans entourage dont les branches latérales sont montées pour pivoter autour d'un axe horizontal oblique.

Ainsi le document EP-A-0 426 006 décrit des lunettes comportant des verres solidaires d'une monture incluant, d'une part, une partie d'enchâssement des verres, et, d'autre part, des branches formées de tiges cylindriques reliées à la partie d'enchâssement par des parties coudées. Ainsi, chaque branche pivote selon une trajectoire conique autour de l'axe de la vis reliant la branche à la partie coudée, entre une position déployée de la branche qui est alors perpendiculaire à la partie d'enchâssement, et une position repliée de la branche qui est alors parallèle à la partie d'enchâssement. L'articulation est dans ce cas totalement intégrée dans la branche et dans la partie coudée. Cependant, un tel agencement suppose d'avoir des branches et des parties coudées ayant une section relativement importante, très supérieure à la section de branches filaires, de sorte que ce montage est inapplicable aux lunettes à monture filaire.

Cette considération a justement conduit la demanderesse à concevoir un autre type de lunettes, dont les branches latérales sont montées pour pivoter autour d'un axe horizontal oblique, lesdites branches latérales étant de conception filaire. Le document US-A-6 428 166 de la demanderesse décrit ainsi un agencement dans lequel chaque branche a une extrémité d'articulation conformée en oeillet inscrit dans un plan vertical sécant d'une direction longitudinale générale de la branche, et un palier d'articulation est fixé sur une surface interne de la zone latérale correspondante pour recevoir l'oeillet à pivotement autour d'un axe sensiblement normal à ladite surface interne. Dans ce cas, chaque branche latérale articulée est montée pour pivoter entre une positon déployée d'utilisation et une position repliée contre les surfaces internes des verres. Ceci permet en particulier d'obtenir un encombrement extrêmement réduit en position repliée, rendant possible un rangement dans un étui plat légèrement incurvé.

L'agencement précité, décrit dans le document US-A-6 428 166 de la demanderesse, utilise des éléments d'articulation qui sont en appui direct contre les surfaces internes des verres, de sorte que l'inclinaison des axes obliques de pivotement des branches est en réalité dépendante du rayon de courbure des verres au niveau de l'appui des paliers d'articulation. Ceci a peu d'importance lorsque l'on utilise un tel agencement pour réaliser des lunettes de type solaire, sans verres correcteurs, auquel cas on utilise des verres galbés dont la courbure ne varie pas. Cependant, cet agencement est moins intéressant lorsque l'on souhaite l'utiliser avec des verres optiques dont la courbure peut varier dans une large mesure en fonction du degré de correction de l'utilisateur. A titre indicatif, le rayon de courbure des verres classiquement utilisés varie de 65 à 140 mm. En outre, il est nécessaire d'utiliser un galbage très marqué des branches latérales articulées dans la mesure où les paliers d'articulation, qui sont en appui contre les surfaces internes des verres, ne peuvent de ce fait aucunement présenter le moindre déport latéral par rapport auxdits verres.

### OBJET DE L'INVENTION

La présente invention a pour objet de concevoir des lunettes du type sans entourage ne présentant pas les inconvénients et limitations précités.

L'invention a ainsi pour objet des lunettes dont la structure permet un montage rapide et fiable, quel que soit le type de verre optique concerné, tout en restant faciles à manipuler lorsque l'on souhaite faire pivoter les branches latérales articulées.

### DEFINITION GENERALE DE L'INVENTION

Ces objets, ainsi que d'autres, sont atteints conformément à l'invention grâce à des lunettes du type sans entourage, comportant un pontet reliant les verres de lunettes et deux branches latérales articulées, chaque branche étant montée pour pivoter autour d'un axe horizontal oblique entre une position déployée d'utilisation et une position repliée contre les surfaces internes des verres, lesdites lunettes étant remarquables en ce que chaque branche latérale est reliée au verre correspondant par un tenon d'articulation de structure monobloc, ledit tenon ayant une portion intérieure fixée avec anti-rotation contre la surface interne du verre, et une portion extérieure déportée latéralement par rapport audit verre, en arrière de laquelle est articulée ladite branche latérale par un oeillet terminal de celle-ci.

L'utilisation d'un tel tenon monobloc simplifie considérablement le stockage et le montage, dans la mesure où il suffit de monter la branche latérale sur le tenon concerné, puis ledit tenon sur le verre correspondant.

De préférence, la portion intérieure de chaque tenon d'articulation est fixée au verre correspondant par une vis traversante, l'anti-rotation étant assurée par un doigt traversant s'étendant en saillie de ladite portion intérieure. En particulier, la portion intérieure pourra présenter un taraudage associé à la vis traversante dont la tige passe par un perçage du verre, et le doigt de ladite portion intérieure sera reçu dans une encoche latérale dudit verre. Un tel mode d'exécution permet d'utiliser un mode d'usinage de plus en plus répandu pour les lunettes du type sans entourage, mode d'usinage selon lequel sont pratiqués, au voisinage de chaque bord latéral de verre de lunettes, un perçage traversant et une encoche latérale débouchante disposée au voisinage dudit perçage.

Avantageusement, la portion extérieure de chaque tenon d'articulation présente une facette arrière s'étendant dans un plan vertical oblique, contre laquelle est maintenu l'oeillet terminal de la branche latérale correspondante. En particulier, la portion extérieure présente un doigt cylindrique saillant de la facette arrière, sur lequel est monté l'oeillet terminal de la branche latérale, le maintien dudit oeillet terminal étant assuré par une vis dont la tige passe par un taraudage ménagé dans l'axe dudit doigt cylindrique. En variante, la portion extérieure reçoit une tige à extrémités filetées, présentant une portion centrale lisse en saillie de la facette arrière et sur laquelle est monté l'oeillet terminal de la branche latérale, le maintien dudit oeillet terminal étant assuré par un écrou vissé sur l'extrémité libre de ladite tige. La présence de cette facette arrière sur chaque tenon d'articulation permet de garantir un positionnement précis dans l'espace pour l'oeillet terminal de chaque branche latérale.

Conformément à une autre caractéristique intéressante, la facette arrière présente en outre deux saillies ou une saillie unique formant butée(s) pour la branche latérale et servant à délimiter la plage de pivotement de ladite branche latérale entre les positions déployée et repliée de celle-ci. Ceci permet d'éviter la présence d'une pièce additionnelle telle que rondelle, comportant des ergots faisant fonction de butées, de sorte que le tenon peut encore rester structure monobloc et unitaire, en intégrant le système de butées angulaires.

De préférence, la portion extérieure de chaque tenon d'articulation présente une facette avant bombée lisse. Cette facette avant bombée lisse est en effet bien visible en face avant lorsque l'on regarde le porteur de lunettes, du fait du déport latéral de cette partie du tenon d'articulation par rapport au bord externe du verre. La facette avant assure donc en outre une fonction d'esthétique qui est importante dans le domaine des lunettes.

Avantageusement encore, la portion intérieure et la portion extérieure de chaque tenon d'articulation forment un coude d'angle obtus, et sont reliées entre elles par une portion centrale qui présente une ductilité permettant un réglage angulaire terminal de ladite portion extérieure par rapport à ladite portion intérieure. Ceci permet un réglage terminal très précis en fonction de la courbure particulière des verres optiques concernés.

De préférence alors, chaque tenon d'articulation est réalisé par moulage en acier inoxydable, et comporte une portion centrale ayant subi un traitement de recuit.

Avantageusement enfin, chaque branche latérale est réalisée en fil titane dont la section est de préférence aplatie pour l'oeillet terminal et la partie adjacente audit oeillet. Ceci permet d'avoir un excellent guidage pour l'oeillet terminal et permet une manipulation aisée pour le pivotement des branches latérales.

D'autres caractéristiques et avantages de l'invention apparaîtront plus clairement à la lumière de la description qui va suivre et du dessin annexé, concernant un mode d'exécution particulier.

### BREVE DESCRIPTION DES DESSINS

Il sera fait référence aux figures du dessin annexé où :
- la figure 1 illustre une paire de lunettes conforme à l'invention, vue en perspective de trois quarts, les branches latérales desdites lunettes étant en position déployée d'utilisation;
- la figure 2 est une vue de dessus de ces mêmes lunettes ;
- les figures 3 et 4 illustrent les lunettes précitées avec les branches latérales en position repliée contre les surfaces internes des verres, la figure 3 étant une vue en élévation arrière, et la figure 4 une vue de dessus;
- la figure 5 illustre en perspective, à plus grande échelle, la zone d'un tenon d'articulation ;
- la figure 6 est une coupe de la figure 5 par un plan médian horizontal ;
- les figure 7a et 7b illustrent les deux positions extrêmes d'une branche latérale articulée, avec les deux butées angulaires associées du tenon d'articulation;
- les figures 8 à 12 sont d'autres vues montrant sous différents angles un tenon d'articulation du type précité ;
- les figures 13a et 13b illustrent en variante les deux positions extrêmes d'une branche latérale articulée, avec une butée angulaire unique associée du tenon d'articulation et un pivot modifié, et les figures 14a, 14b sont les vues de dessus correspondantes.

### DESCRIPTION DETAILLEE DES MODES DE REALISATION PREFERES

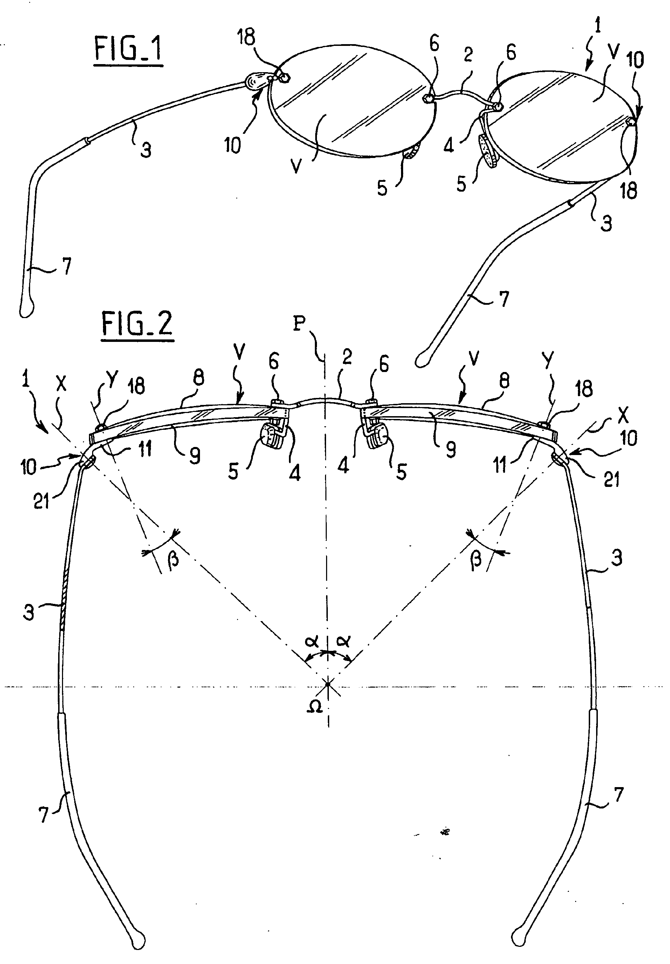

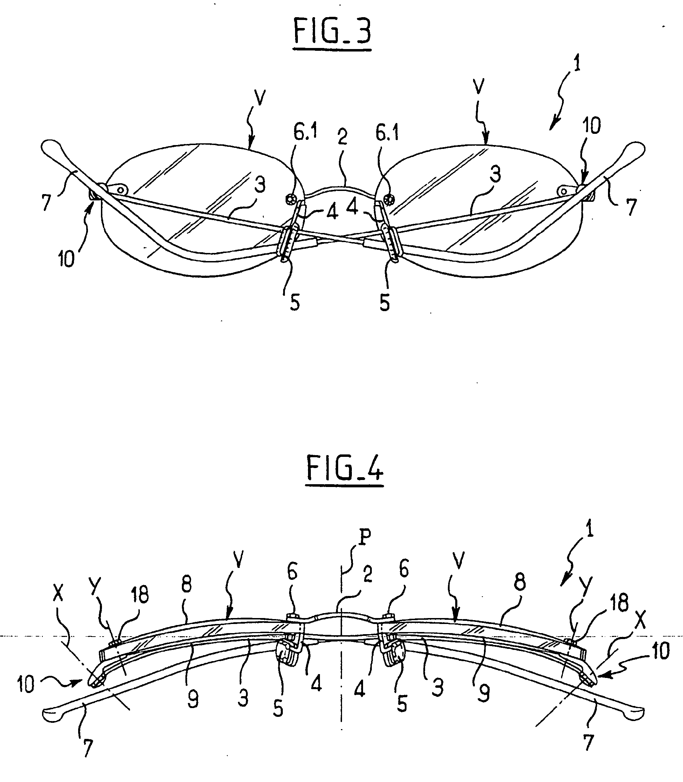

Sur les figures 1 à 4, on distingue des lunettes 1 du type sans entourage, réalisées conformément à l'invention. Ces lunettes comportent, de façon classique, un pontet 2 reliant les deux verres de lunettes V, et deux branches latérales articulées 3. Le pontet 2 présente une cambrure centrale au niveau du plan médian P des lunettes, et se termine par deux boucles passant autour de tiges de boulons de fixation 6, en face avant des verres de lunettes V. Sur la figure 3, on distingue les écrous associés 6.1 qui sont serrés contre la surface interne des verres V. Le fil constitutif du pontet 2 se prolonge vers l'arrière au-delà de chacune de ses boucles par une partie passant dans une encoche latérale du verre afin d'assurer l'anti-rotation, puis par une partie cintrée vers le bas 4 se terminant par une boucle finale destinée à recevoir une plaquette d'appui 5. Le pontet 2 pourra être réalisé selon une structure filaire à fil rond ou plat, en particulier en titane.

Chaque branche latérale 3 est montée pour pivoter autour d'un axe horizontal oblique noté X entre une position déployée d'utilisation (correspondant aux figures 1 et 2), et une position repliée contre les surfaces internes des verres V (correspondant aux figures 3 et 4). En l'espèce, les branches latérales 3 présentent chacune un manchon d'extrémité 7, mais on pourra prévoir en variante une simple boule terminale. Par ailleurs, on a référencé 8 les surfaces externes ou frontales des verres V, et 9 les surfaces internes ou arrière desdits verres.

Conformément à un aspect essentiel de l'invention, chaque branche latérale 3 est reliée au verre V correspondant par un tenon d'articulation 10 de structure monobloc, ledit tenon ayant une portion intérieure 11 fixée avec anti-rotation contre la surface interne 9 du verre V, et une portion extérieure 21 déportée latéralement par rapport audit verre, en arrière de laquelle est articulée ladite branche latérale par un oeillet terminal 3.1 de celle-ci.

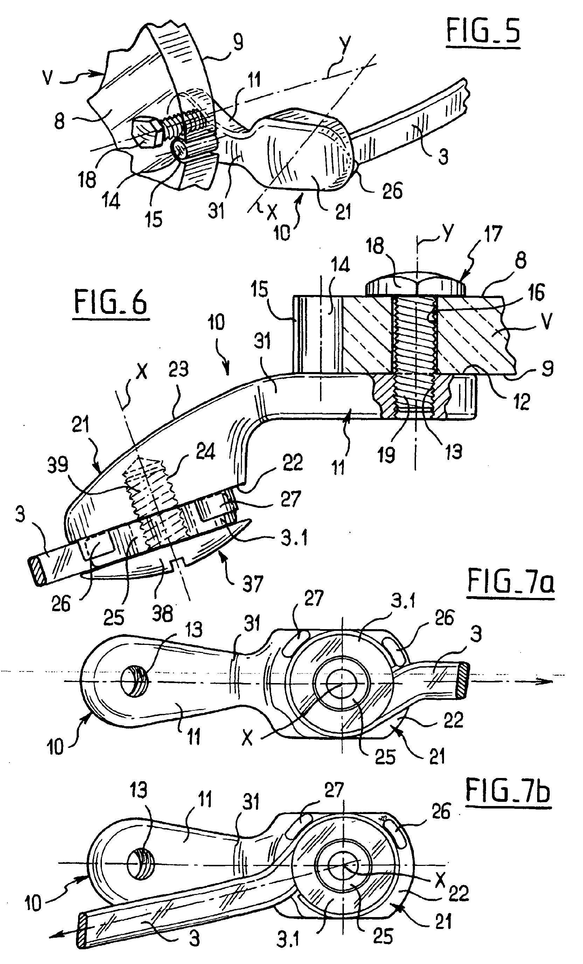

Comme cela est mieux visible sur les figures 5 et 6, la portion intérieure 11 de chaque tenon d'articulation 10 est fixée au verre correspondant V par une vis traversante 17, l'anti-rotation étant assurée par un doigt traversant 14 s'étendant en saillie de ladite portion intérieure. En l'espèce, la portion intérieure 11 présente un taraudage 13 associé à la vis traversante 17. La tige 19 de la vis traversante 17 passe alors dans un perçage traversant 16 du verre V, pour se visser dans le taraudage précité 13 de la portion intérieure 11, jusqu'à ce que la tête 18 de la vis 17 vienne en appui contre la surface externe 8 du verre V. La surface interne 9 du verre V est quant à elle en appui contre une face frontale plane 12 de la portion intérieure 11 du tenon d'articulation 10. On a noté Y l'axe de la vis 17 et des perçages 16 et taraudages 13 associés. Le doigt 14, de structure cylindrique, est quant à lui reçu dans une encoche latérale 15 du verre V, ce qui assure la fonction d'anti-rotation recherchée. L'ensemble constitué par la vis traversante 17 et le doigt traversant 14 assure un maintien en position extrêmement stable du tenon d'articulation 10 par rapport au verre V, sans débattement parasite dudit tenon contre la surface interne du verre.

Un tel système de fixation à perçage traversant 16 et encoche latérale débouchante 15 pratiqués dans le verre V est maintenant communément répandu pour les lunettes du type sans entourage. Ce système peut donc être conservé dans le cadre de l'invention.

La portion extérieure 21 de chaque tenon d'articulation 10 présente une facette arrière 22 s'étendant dans un plan vertical oblique, contre laquelle est maintenu l'oeillet terminal 3.1 de la branche latérale correspondant 3. Ainsi, quelle que soit la position angulaire de la branche latérale articulée 3, son oeillet terminal 3.1 glisse contre la facette verticale oblique 22 du tenon d'articulation 10, ce qui garantit la constance directionnelle de l'axe d'articulation noté X.

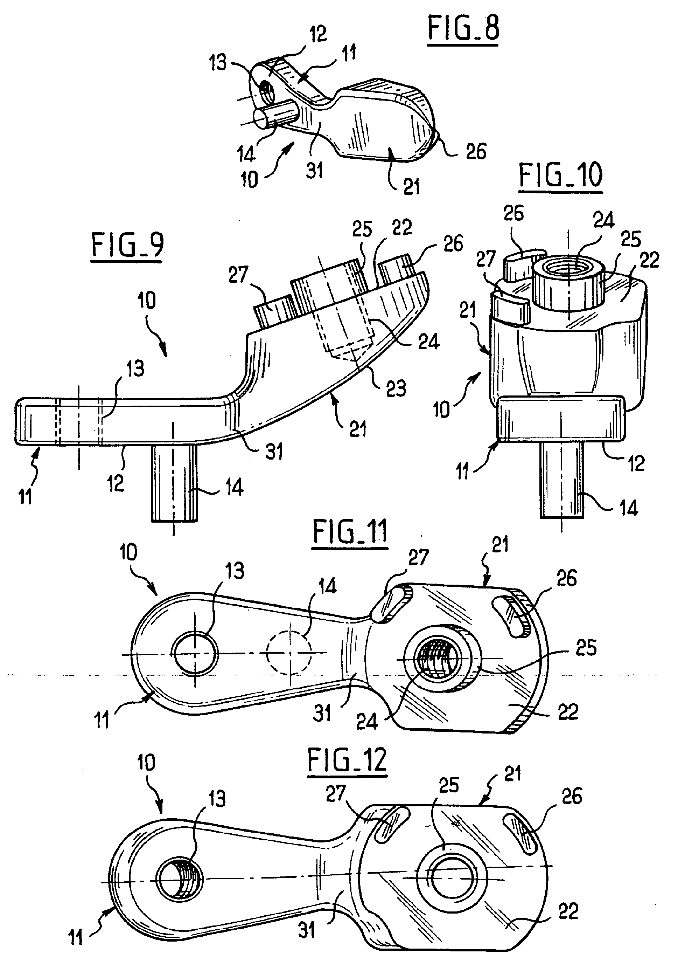

La structure particulière de la portion extérieure 21 du tenon d'articulation 10 sera mieux comprise en se référant aux figures 8 à 12.

On distingue ainsi un taraudage borgne 24 s'étendant selon l'axe X perpendiculairement au plan de la facette oblique 22, destiné à recevoir la tige filetée 39 de la vis de maintien associée 37. La portion extérieure 21 présente du côté arrière un doigt cylindrique 25 saillant de la face arrière 22, sur lequel est monté l'oeillet terminal 3.1 de la branche latérale 3, de façon à former un pivot d'articulation pour la branche latérale concernée. Comme cela est mieux visible sur la vue en coupe de la figure 6, le maintien de l'oeillet terminal 3.1 de la branche latérale 3 est assuré par la vis 37, et plus précisément par la tête 38 de cette vis, vis dont la tige filetée 39 est reçue, et de préférence collée pour une meilleure sécurité, dans un taraudage axial du doigt cylindrique 25 se prolongeant par le taraudage borgne 24 ménagé par la portion extérieure 21, coaxialement à l'axe du doigt cylindrique 25, c'est-à-dire selon l'axe X de pivotement de la branche latérale 3.

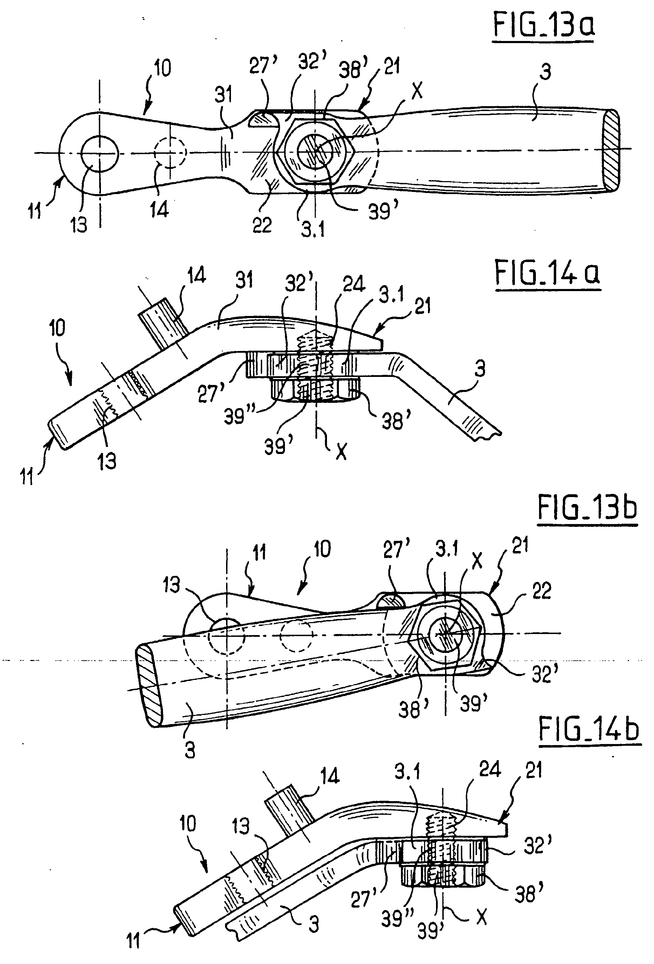

Comme illustré aux figures 13a à 14b, on pourra en variante supprimer le doigt cylindrique 25, et remplacer la vis 37 par une tige 39' filetée à ses deux extrémités et à partie centrale 39" lisse formant palier pour l'oeillet terminal 3.1 de la branche latérale concernée 3; une extrémité filetée de cette tige se visse alors dans le taraudage 24, et l'autre extrémité filetée reçoit un écrou de maintien 38' assurant la même fonction que la tête 38 de la vis 37. Par sécurité, un collage sera prévu aux deux extrémités filetées de la tige 39'.

Il est intéressant de pouvoir limiter la plage de pivotement angulaire de chaque branche latérale 3, afin d'éviter une rotation excessive allant au-delà de l'angle délimité entre la position déployée d'utilisation et la position repliée de rangement.

On pourrait assurer cette fonction de limitation de plage angulaire par une ou deux rondelles superposées, coaxiales à l'axe X, présentant un ergot latéral formant butée. Cependant, pour éviter la présence d'un ou de deux composants supplémentaires, on a prévu, conformément à l'invention, que la facette arrière 22 présente deux saillies 26, 27 formant butées pour la branche latérale 3, et servant à délimiter la plage de pivotement de ladite branche latérale entre les positions déployée et repliée de celle-ci.

Ceci sera mieux compris en se référant aux figures 7a et 7b, qui sont des vues arrière dans l'axe de la charnière X, montrant respectivement la position déployée et repliée d'une branche latérale 3. Sur la figure 7a, correspondant à la position déployée, la butée active est la butée 26, tandis que sur la figure 7b, correspondant à la position repliée, la butée active est la butée 27. La hauteur des butées 26, 27 (parallèlement à l'axe X) sera de préférence légèrement inférieure à la largeur du fil constitutif de l'oeillet terminal de la branche, afin de ne pas interférer avec le maintien en position assuré par la tête 38 de la vis de maintien 37 (ou l'écrou 38' vissé sur l'extrémité arrière de la tige filetée 39' dans le cadre de la variante précitée).

En variante, comme illustré aux figures 13a à 14b, on pourra remplacer le système précité à deux butées saillantes par une butée unique 27' coopérant, pour la position déployée de la branche latérale, avec une pointe 32' en saillie de l'oeillet terminal 3.1. La butée unique 27' présente à cet effet une section de forme demi-cylindrique.

En face avant, la portion extérieure 21 présente une facette bombée lisse noté 23. Cette facette est ici légèrement cambrée, et, comme elle est visible frontalement du fait de son déport latéral au-delà du bord du verre, elle doit assurer une fonction esthétique aux lunettes ainsi équipées. Par suite, on pourra organiser cette face frontale 23 selon différents types de motifs en relief, lisse, en godrons, strié, etc...

Ainsi que cela est mieux visible sur les figures 6 et 9, la portion intérieure 11 et la portion extérieure 21 de chaque tenon d'articulation 10 forment ici un coude d'angle obtus, et sont reliées entre elles par une portion centrale 31.

Pour ce qui est des angles, on pourra se référer à la figure 2 qui montre l'angle fait par chaque axe de pivotement de branche X par rapport au plan vertical médian P, au niveau de leurs intersections Ω, cet angle α étant voisin de 45°. Chaque branche latérale 3 décrit alors une demi-nappe conique dans sa plage angulaire disponible de pivotement autour de son axe X. L'axe Y, correspondant à une direction perpendiculaire à la surface interne de chaque verre V, forme quant à lui un angle β par rapport à l'axe X situé du même côté du plan P, la valeur de l'angle β étant variable, mais en général voisine de 25° pour un rayon de courbure de 87 mm au niveau de la zone concernée de la surface interne 9 du verre V.

Il peut s'avérer intéressant de prévoir que la portion centrale 31 reliant la portion intérieure 11 et la portion extérieure 21 de chaque tenon d'articulation 10 présente une ductilité propre permettant un réglage angulaire terminal de ladite portion extérieure par rapport à ladite portion intérieure. Ceci permet à l'opticien d'effectuer, au moment de l'essayage final, un dernier réglage permettant d'adapter parfaitement la géométrie du tenon d'articulation 10 (c'est-à-dire la valeur de l'angle obtus du coude formé par les deux portions 11, 21 du tenon 10) à la courbure des verres optiques concernés, de telle façon que les branches latérales 3 s'étendent dans une direction générale perpendiculaire au plan frontal lorsqu'elles sont en position déployée d'utilisation.

On pourra prévoir que chaque tenon d'articulation 10 est réalisé par moulage en acier inoxydable, et comporte alors une portion centrale 31 ayant subi un traitement de recuit apte à conférer la ductilité désirée pour permettre le réglage terminal précité.

Chaque branche latérale 3 sera de préférence réalisée en fil titane, dont la section est, comme cela est illustré ici, de préférence aplatie pour l'oeillet terminal 3.1 et la partie adjacente audit oeillet. La partie restante de chaque branche latérale, s'étendant vers l'arrière à partir de la mi-longueur de celle-ci jusqu'à partie enrobée par les manchons 7, pourra alors être section ronde, ce qui facilite la mise en place desdits manchons, ou de boules terminales encastrées équivalentes.

On est ainsi parvenu à réaliser une structure de lunettes permettant un montage de tout type de verres optiques au moyen d'une monture de type filaire, en gardant le principe d'un pivotement des branches latérales autour d'un axe horizontal oblique.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Lunettes du type sans entourage, comportant un pontet (2) reliant les deux verres de lunettes (V) et deux branches latérales articulées (3), chaque branche latérale (3) étant montée pour pivoter autour d'un axe horizontal oblique (X) entre une position déployée d'utilisation et une position repliée contre les surfaces internes des verres (V), **caractérisées en ce que** chaque branche latérale (3) est reliée au verre (V) correspondant par un tenon d'articulation (10) de structure monobloc, ledit tenon ayant une portion intérieure (11) fixée avec anti-rotation contre la surface interne (9) du verre (V), et une portion extérieure (21) déportée latéralement par rapport audit verre, en arrière de laquelle est articulée ladite branche latérale par un oeillet terminal (3.1) de celle-ci.

2. Lunettes selon la revendication 1, **caractérisées en ce que** la portion intérieure (11) de chaque tenon d'articulation (10) est fixée au verre correspondant (V) par une vis traversante (17), l'anti-rotation étant assurée par un doigt traversant (14) s'étendant en saillie de ladite portion intérieure.

3. Lunettes selon la revendication 2, **caractérisées en ce que** la portion intérieure (11) présente un taraudage (13) associé à la vis traversante (17) dont la tige (19) passe par un perçage (16) du verre (V), et le doigt (14) de ladite portion intérieure est reçu dans une encoche latérale (15) dudit verre.

4. Lunettes selon l'une des revendications 1 à 3, **caractérisées en ce que** la portion extérieure (21) de chaque tenon d'articulation (10) présente une facette arrière (22) s'étendant dans un plan vertical oblique, contre laquelle est maintenu l'oeillet terminal (3.1) de la branche latérale correspondante (3).

5. Lunettes selon la revendication 4, **caractérisées en ce que** la portion extérieure (21) présente un doigt cylindrique (25) saillant de la facette arrière (22), sur lequel est monté l'oeillet terminal (3.1) de la branche latérale (3), le maintien dudit oeillet terminal étant assuré par une vis (37) dont la tige (39) passe par un taraudage (24) ménagé dans l'axe dudit doigt cylindrique.

6. Lunettes selon la revendication 4 ou la revendication 5, **caractérisées en ce que** la facette arrière (22) présente en outre deux saillies (26,27) formant butées pour la branche latérale (3) et servant à délimiter la plage de pivotement de ladite branche latérale entre les positions déployée et repliée de celle-ci.

7. Lunettes selon la revendication 4, **caractérisées en ce que** la portion extérieure (21) reçoit une tige (39') à extrémités filetées, présentant une portion centrale lisse (39'') en saillie de la facette arrière (22) et sur laquelle est monté l'oeillet terminal (3.1) de la branche latérale (3), le maintien dudit oeillet terminal étant assuré par un écrou (38') vissé sur l'extrémité libre de ladite tige.

8. Lunettes selon la revendication 4 ou la revendication 7, **caractérisées en ce que** la facette arrière (22) présente en outre une saillie unique (27') formant butée pour la branche latérale (3) et servant à délimiter la plage de pivotement de ladite branche latérale entre les positions déployée et repliée de celle-ci.

9. Lunettes selon l'une des revendications 4 à 8, **caractérisées en ce que** la portion extérieure (21) présente une facette avant bombée lisse (23).

10. Lunettes selon l'une des revendications 1 à 9, **caractérisées en ce que** la portion intérieure (11) et la portion extérieure (21) de chaque tenon d'articulation (10) forment un coude d'angle obtus, et sont reliées entre elles par une portion centrale (31) qui présente une ductilité permettant un réglage angulaire terminal de ladite portion extérieure par rapport à ladite portion intérieure.

11. Lunettes selon la revendication 10, **caractérisées en ce que** chaque tenon d'articulation (10) est réalisé par moulage en acier inoxydable, et comporte une portion centrale (31) ayant subi un traitement de recuit.

12. Lunettes selon l'une des revendications 1 à 11, **caractérisées en ce que** chaque branche latérale (3) est réalisée en fil de titane dont la section est de préférence aplatie pour l'oeillet terminal (3.1) et la partie adjacente audit oeillet.

## Claims

1. Spectacles of the type without a surround, comprising a bridge (2) interconnecting two lenses (V), and two hinged side arms (3), each side arm (3) being mounted to pivot about a horizontal axis (X) that is oblique, between a deployed position for use and a folded position against the inside surfaces of the lenses (V), the spectacles being **characterized in that** each side arm (3) is connected to the corresponding lens (V) via a hinge link (10) of one-piece structure, said link having an inner portion (11) fixed against the inside surface (9) of the lens and prevented from turning relative thereto, and an outer portion (21) offset laterally from said lens, with said side arm being hinged to the back of said outer portion via a terminal eyelet (3.1) of the side arm.

2. Spectacles according to claim 1, **characterized in that** the inner portion (11) of each hinge link (10) is fixed to the corresponding lens (V) by a through screw (17), turning being prevented by a through finger (14) projecting from said inner portion.

3. Spectacles according to claim 2, **characterized in that** the inner portion (11) presents tapping (13) associated with the through screw (17) whose shank (19) passes through a hole (16) in the lens (V), and the finger (14) of said inner portion is received in a lateral notch (15) in said lens.

4. Spectacles according to any one of claims 1 to 3, **characterized in that** the outer portion (21) of each hinge link (10) presents a rear facet (22) extending in a vertical plane that is oblique, and against which the terminal eyelet (3.1) of the corresponding side arm (3) is held.

5. Spectacles according to claim 4, **characterized in that** the outer portion (21) presents a cylindrical finger (25) projecting from the rear facet (22), with the terminal eyelet (3.1) of the side arm (3) being mounted thereon, said terminal eyelet being held by means of a screw (37) whose shank (39) passes into a tapped hole (24) formed on the axis of said cylindrical finger.

6. Spectacles according to claim 4 or claim 5, **characterized in that** the rear facet (22) further presents two abutment-forming projections (26, 27) for engaging the side arm (3) and serving to define the range over which said side arm can pivot between its deployed position and its folded position.

7. Spectacles according to claim 4, **characterized in that** the outer portion (21) receives a grub screw (39') having threaded ends, and presenting a central portion (39") that is smooth, the grub screw projecting from the rear facet (22) and having the terminal eyelet (3.1) of the side arm (3) mounted thereon, said terminal eyelet being held in place by a nut (38') screwed onto the free end of said grub screw.

8. Spectacles according to claim 4 or claim 7, **characterized in that** the rear facet (22) further presents a single abutment-forming projection (27') for engaging the side arm (3) and serving to define the range over which said side arm can pivot between its deployed position and its folded position.

9. Spectacles according to any one of claims 4 to 8, **characterized in that** the outer portion (21) presents a front facet (23) that is smooth and convex.

10. Spectacles according to any one of claims 1 to 9, **characterized in that** the inner portion (11) and the outer portion (21) of each hinge link (10) together form an obtuse-angled bend, and are connected together by a central portion (31) which presents ductility enabling the angular position of said outer portion to be adjusted relative to said inner portion.

11. Spectacles according to claim 10, **characterized in that** each hinge link (10) is made as a casting of stainless steel, and includes a central portion (31) that has been subjected to annealing treatment.

12. Spectacles according to any one of claims 1 to 11, **characterized in that** each side arm (3) is made of titanium wire of section that is preferably flat for the terminal eyelet (3.1) and its portion adjacent to said eyelet.

## Patentansprüche

1. Randlose Brille, umfassend einen Steg (2), der die beiden Brillengläser (V) miteinander verbindet, sowie zwei angelenkte Seitenbügel (3), wobei jeder Seitenbügel (3) derart gelagert ist, dass er um eine horizontale Schrägachse (X) zwischen einer aufgeklappten Gebrauchsstellung und einer gegen die Innenflächen der Gläser (V) eingeklappten Stellung verschwenkt werden kann, **dadurch gekennzeichnet, dass** jeder Seitenbügel (3) mit dem entsprechenden Glas (V) über einen Gelenklappen (10) einstückiger Struktur verbunden ist, wobei der Lappen einen Innenabschnitt (11) hat, der mit Rotationsschutz an der Innenfläche (9) des Glases (V) befestigt ist, sowie einen Außenabschnitt (21), der relativ zum Glas seitlich versetzt und hinter dem der Seitenbügel über eine Endöse (3.1) desselben angelenkt ist.

2. Brille nach Anspruch 1, **dadurch gekennzeichnet, dass** der Innenabschnitt (11) jedes Gelenklappens (10) am entsprechenden Glas (V) durch eine Durchgangsschraube (17) befestigt ist, wobei der Rotationsschutz mittels eines Durchgangszapfens (14) sichergestellt wird, der von dem genannten Innenabschnitt absteht.

3. Brille nach Anspruch 2, **dadurch gekennzeichnet, dass** der Innenabschnitt (11) ein Innengewinde (13) aufweist, das mit der Durchgangsschraube (17) in Verbindung steht, deren Schaft (19) durch eine Bohrung (16) im Glas (V) hindurchgeht, und der Zapfen (14) des genannten Innenabschnittes in einer seitlichen Kerbe (15) des Glases aufgenommen ist.

4. Brille nach einem der Ansprüche 1 bis 3, **dadurch gekennzeichnet, dass** der Außenabschnitt (21) jedes Gelenklappens (10) eine rückseitige Schleiffläche (22) aufweist, die sich in einer vertikalen Schrägebene erstreckt und gegen die die Endöse (3.1) des entsprechenden Seitenbügels (3) gehalten wird.

5. Brille nach Anspruch 4, **dadurch gekennzeichnet, dass** der Außenabschnitt (21) einen zylindrischen Zapfen (25) aufweist, der von der rückseitigen Schleiffläche (22) absteht und an dem die Endöse (3.1) des Seitenbügels (3) angebracht ist, wobei das Halten der Endöse (3.1) durch eine Schraube (37) sichergestellt wird, deren Schaft (39) durch ein Innengewinde (24) hindurchgeht, das in der Achse des zylindrischen Zapfens ausgebildet ist.

6. Brille nach Anspruch 4 oder Anspruch 5, **dadurch gekennzeichnet, dass** die rückseitige Schleiffläche (22) ferner zwei Vorsprünge (26, 27) aufweist, die Anschläge für den Seitenbügel (3) bilden und dazu dienen, den Schwenkbereich des Seitenbügels zwischen dessen ausgeklappter und eingeklappter Stellung zu begrenzen.

7. Brille nach Anspruch 4, **dadurch gekennzeichnet, dass** der Außenabschnitt (21) einen Schaft (39') aufnimmt, dessen Enden mit Gewinden versehen sind und der einen zentralen glatten Abschnitt (39") aufweist, der von der rückseitigen Schleiffläche (22) absteht und an dem die Endöse (3.1) des Seitenbügels (3) angebracht ist, wobei das Halten dieser Endöse durch eine Mutter (38') sichergestellt wird, die auf das freie Ende des Schaftes geschraubt wird.

8. Brille nach Anspruch 4 oder Anspruch 7, **dadurch gekennzeichnet, dass** die rückseitige Schleiffläche (22) ferner einen einzigen Vorsprung (27') aufweist, der einen Anschlag für den Seitenbügel (3) bildet und dazu dient, den Schwenkbereich des Seitenbügels zwischen dessen ausgeklappter und eingeklappter Stellung zu begrenzen.

9. Brille nach einem der Ansprüche 4 bis 8, **dadurch gekennzeichnet, dass** der Außenabschnitt (21) eine gewölbte, glatte vordere Schleiffläche (23) aufweist.

10. Brille nach einem der Ansprüche 1 bis 9, **dadurch gekennzeichnet, dass** der Innenabschnitt (11) und der Außenabschnitt (21) jedes Gelenklappens (10) einen stumpfen Winkel zueinander bilden und miteinander über einen zentralen Abschnitt (31) verbunden sind, der eine Duktilität aufweist, die eine abschließende Winkeleinstellung des genannten Außenabschnittes relativ zum Innenabschnitt ermöglicht.

11. Brille nach Anspruch 10, **dadurch gekennzeichnet, dass** jeder Gelenklappen (10) aus rostfreiem Stahl durch Formgießen hergestellt wird und einen zentralen Abschnitt (31) umfasst, der einer Glühbehandlung unterzogen wurde.

12. Brille nach einem der Ansprüche 1 bis 11, **dadurch gekennzeichnet, dass** jeder Seitenbügel (3) aus Titandraht hergestellt ist, dessen Querschnitt vorzugsweise für die Endöse (3.1) und den an die Öse angrenzenden Teil abgeflacht ist.
